# EUROPEAN PATENT APPLICATION

(11) **EP 1 739 608 A1**
(43) Date of publication of application: **03.01.2007**
(21) Application number: 06010832.1
(22) Date of filing: 26.05.2006
(51) Int. Cl.: G06Q 10/00

(54) **Asp service apparatus**

(30) Priority: 20.06.2005 JP 2005178712
(71) Applicant: Hitachi, Ltd., Tokyo 100-8280 (JP)
(72) Inventor: Sato, Tomonobu, Tokyo 100-8220 (JP)
(74) Representative: Strehl Schübel-Hopf & Partner

(57) **Abstract**

A member management system (FIG. 1) including a characteristic of "ASP member management" which can group member information according to attributes of services provided by the ASP, which are the highest-level attributes, and member contract information keys which are held by the ASP for all members based on common rules. Then, a table can be prepared for storing attributes of services provided by the ASP, and attributes of a billing group unit and a service utilization condition, in association with the member contract information keys (35), such that the most basic information required for particular processing is extracted at each occasion for executing the processing.

## Description

### BACKGROUND OF THE INVENTION

The present invention relates to techniques for managing members in an application service provider (ASP) which provides a plurality of services. Particularly, the present invention relates, among others, to techniques for handing billing for utilization in the ASP using a computer. For example, the present invention relates to techniques for efficiently charging for a plurality of respective services in collection.

For managing members in a so-called ASP, attributes of ASP services include highest-level management item keys such as a billing group unit, a contract unit, and a service utilization unit. JP-A-2004-206253 discloses an example of such a member management. JP-A-2004-206253 is intended to unitarily manage data for processing involved in billing, transfer, and receipt in commercial transactions to efficiently carry out respective processing from billing to transfer and receipt. To achieve this object, a claimant, resulting from a commercial transaction, transmits billing data to a management server 101 through a terminal device 102. The management server 101 stores the received billing data in a billing DB 201, and passes this billing data to data converting means 208. The data converting means 208 extracts items required for a transfer from among those items included in the billing data to generate transfer data. The generated transfer data is stored in a transfer DB 202. A terminal device 103 of a remitter is notified of the generated billing data. As the remitter accesses the management server 101 to acknowledge the transfer data, the management server 101 accesses a transfer server of an appropriate financial institution using the transfer data to cause the transfer server 104 to execute transfer processing.

### SUMMARY OF THE INVENTION

However, the foregoing prior art implies problems of an enormous load for billing and maintenance of member information, a requirement for a large-scale system for processing, and a sudden increase in processing time possibly resulting from an increase in members and an increase in types of provided ASP services. In other words, the foregoing prior art does not have a critical mind against the billing in a plurality of services. Specifically, the prior art does not take into consideration efforts in accounting calculations which suffer from an increased amount of calculations and require complicated applications for the calculations because of different calculation methods required for the accounting for a plurality of respective services.

Conventionally, ASP member information has been collectively processed for management, whereas the present invention focuses attention to the characteristic of "ASP member management" which can group member information according to attributes of services provided by the ASP, which are the highest-level attributes, and member contract information keys which are held by the ASP for all members based on common rules. Then, the present invention creates a table which stores attributes of services provided by the ASP, and attributes of a billing group unit and a service utilization condition, in association with the member contract information keys, such that the most basic information required for particular processing is extracted at each occasion for executing the processing. The most basic information may be information common to each service, which may be extracted for use.

More specifically, the present invention takes the following configuration.

An ASP service apparatus for providing a plurality of services includes a table for storing an attribute of a service provided by an ASP, and attributes of a billing group unit and a service utilization condition in relation to one another for each member contract information key, means for accepting a request for the service, means for extracting basic information required for information processing for implementing the service in response to the accepted request using the table, and means for performing predetermined information processing using the extracted information.

### BRIEF DESCRIPTION OF THE DRAWINGS

Fig. 1 is a diagram illustrating the configuration of a multi-member management system in an ASP;

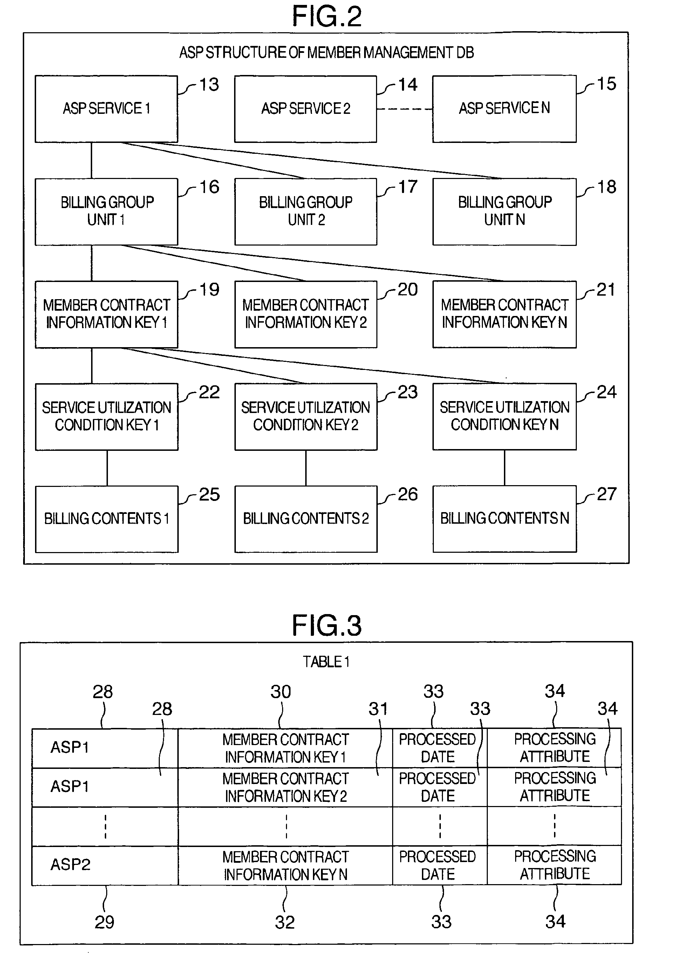

Fig. 2 is a diagram illustrating the structure of an ASP member management DB;
Fig. 3 is a diagram showing a management table 1 which shows the relationship between ASP services and member contract information keys;

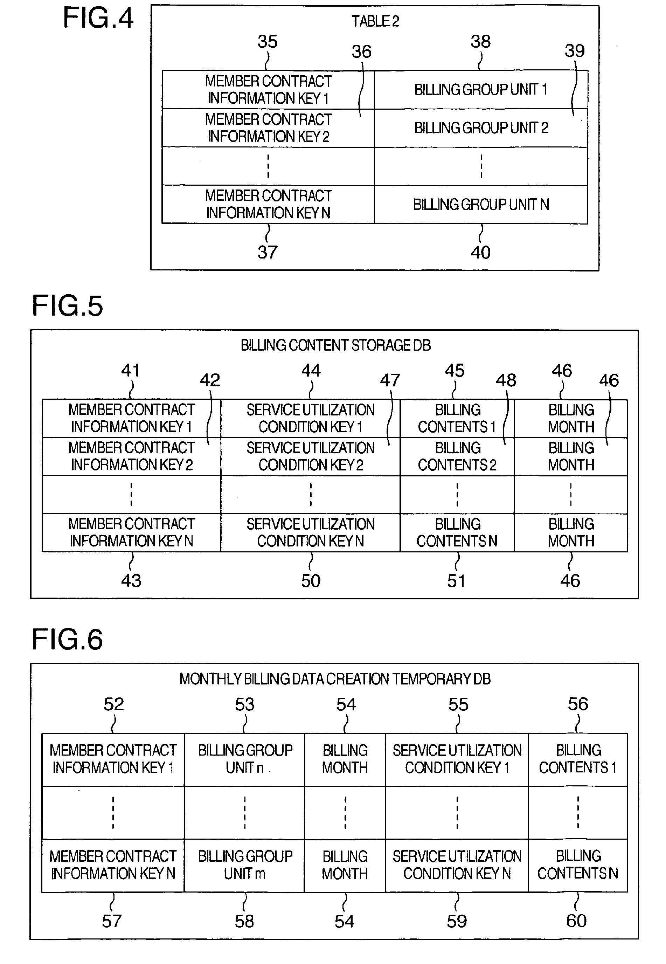

Fig. 4 is a management table 2 showing the relationship between billing group units 1 and the member contract information keys;
Fig. 5 is a diagram showing a billing content storage DB;
Fig. 6 is a diagram showing a monthly billing data creation temporary DB;
Fig. 7 is a diagram illustrating a processing flow for creating monthly billing data (9);

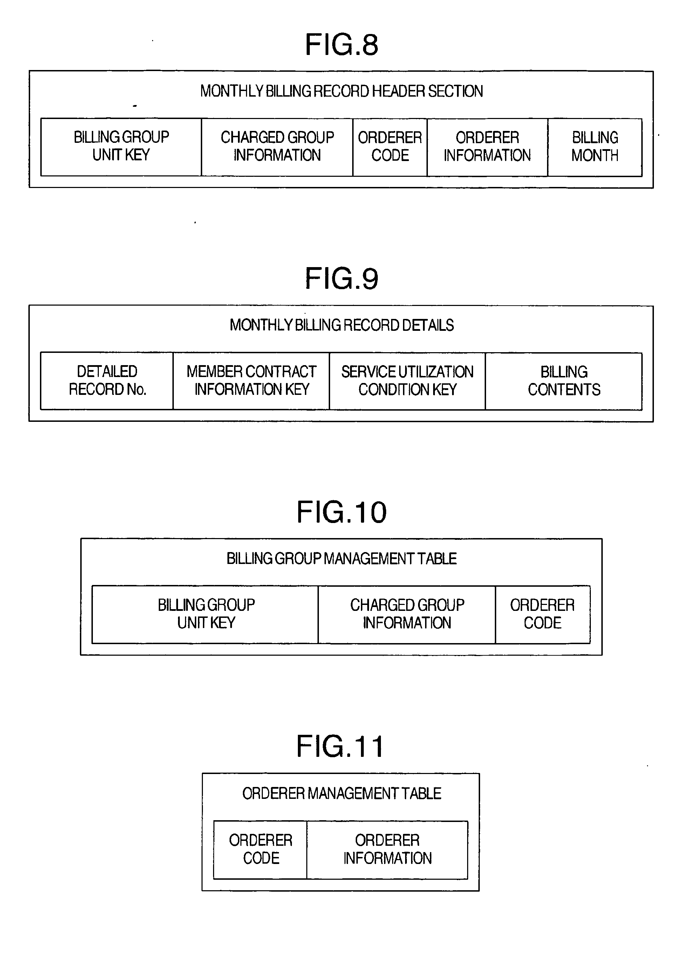

Fig. 8 is a diagram showing a monthly billing record header section;
Fig. 9 is a diagram showing details of a monthly billing record;
Fig. 10 is a diagram showing a billing group management table; and
Fig. 11 is a diagram showing an orderer management table.

### DESCRIPTION OF THE EMBODIMENTS

In the following, one embodiment of the present invention will be described in detail with reference to the accompanying drawings.

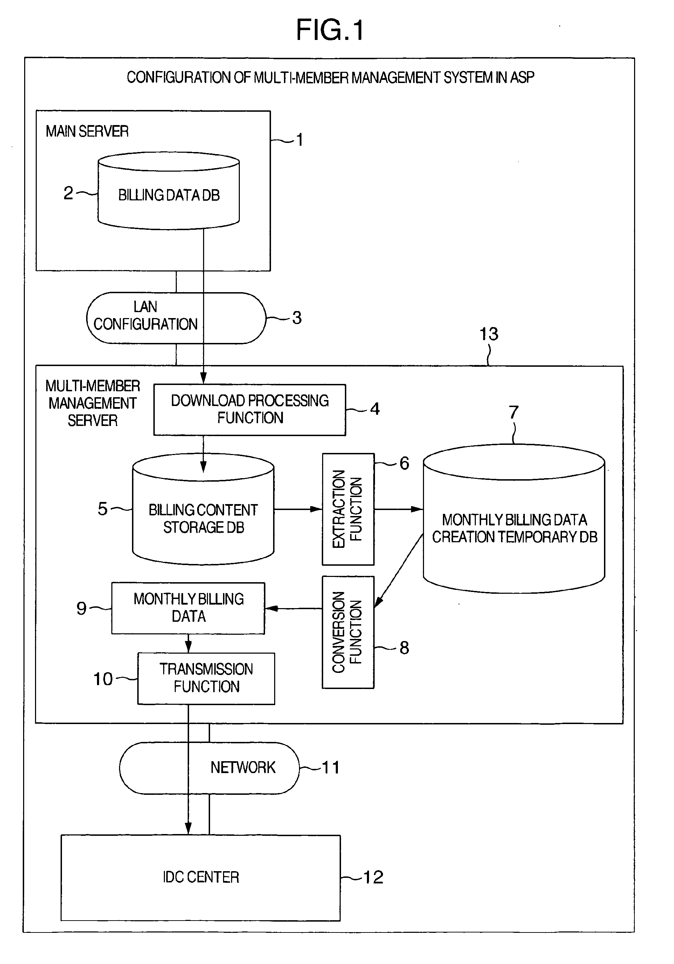

Fig. 1 is a diagram illustrating the configuration of a multi-member management system in an ASP. The system comprises a main server (1) for providing ASP services; a billing data DB (2) for recording provision situations; a LAN configuration (3); a multi-member management server (13); a download processing function (4); a billing content storage DB (5); a monthly billing data creation temporary DB (7); monthly billing data (9); an extraction function (6); a conversion function (8); and a transmission function (10). The system is connected through a network (11) to an IDC center in which installed is a server of a client to which monthly billing data is sent.

Next, the embodiment of the present invention will be described in greater detail with reference to the accompanying drawings.

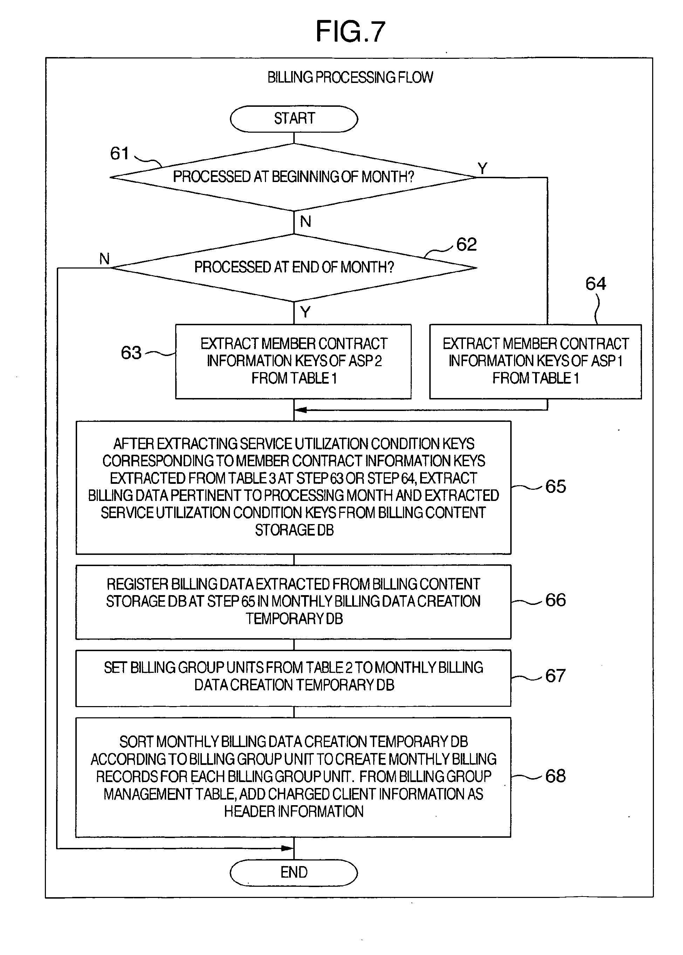

In Fig. 1, at a time billing data is established for a month, the billing data is stored in the billing content storage DB (5) of the multi-member management server (13). Subsequently, the monthly billing data (9) is created in accordance with a flow of Fig. 7.

Then, the transmission function (10) sends the monthly billing data (9) to the IDC center (12).

Next, the flow of Fig. 7 will be described in detail. As will be appreciated, this processing is executed by a processing unit (CPU) in accordance with a program stored in a computer.

### Steps 61, 62, and 53, 64:

It is first determined at steps 61, 62 whether or not a billing process should be started. If it is determined, as a result, that the billing process should be started, the flow proceeds to steps 63, 64, where the billing process is started.

More specifically, it is determined at step 61 whether or not a billing processing timing is the "beginning of the month." When yes, the flow proceeds to step 64, where member contract information keys are extracted from the table 1. On the other hand, when no at step 61, the flow proceeds to step 62. At step 62, it is determined whether or not the billing processing timing is the "end of the month." When yes, the flow proceeds to step 63, where member contract information keys are extracted from the table 1.

When no at step 62, the process is terminated without further actions.

### Step 65:

After extracting service unitization condition keys corresponding to the member contract information keys extracted at steps 63, 64 from the table 3, billing data pertinent to a month under processing and the extracted service utilization condition keys are extracted from the billing content storage DB.

### Step 66:

The billing data extracted from billing content storage DB at step 65 are registered in the monthly billing data creation temporary DB.

### Step 67:

The billing group unit is set from the table 2 to the monthly billing data creation temporary DB. Step 68:

The monthly billing data creation temporary DB is sorted according to the billing group unit to create monthly billing records in units of billing groups. In this event, from the billing group management table, charged client information is added as header information. This process is executed until records are exhausted in the monthly billing data creation temporary DB.

The efficiency of operations can be improved in the billing process for a plurality of services provided by the ASP. The foregoing ASP service apparatus can solve the aforementioned problems, flexibly accommodate the ASP's services even if the types of services are increased in future, and reduce a processing load on the system.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An ASP service apparatus for providing a plurality of services, comprising:
a table (1) for storing activities for billing for the services in relation to an attribute of a service provided by an ASP, and attributes of a billing group unit and a service utilization condition for each member contract information key;
means (4) for accepting a request for the service;
means (6) for extracting basic information required for information processing for implementing the service in response to the accepted request using said table; and
means (8) for performing predetermined information processing using the extracted information.

2. An ASP service apparatus according to claim 1, wherein:
said means (8) for performing information processing calculates fees for a plurality of services provided by said ASP.

3. An ASP service apparatus according to claim 2, wherein:
said extracting means (6) executes the processing on a periodic basis at a time in accordance with a billing time.

4. An ASP service apparatus according to claim 3, wherein:
said extracting means (6) executes the extraction processing every month.

5. A service providing method using an ASP service apparatus for providing a plurality of services, said method comprising the steps of:
providing a table (1) for storing activities for billing for the services in relation to an attribute of a service provided by an ASP, and attributes of a billing group unit and a service utilization condition for each member contract information key;
accepting a request for the service;
extracting basic information required for information processing for implementing the service in response to the accepted request using said table; and
performing predetermined information processing using the extracted information.

6. A service providing method according to claim 5, wherein:
said step of performing predetermined information processing calculates fees for a plurality of services provided by said ASP.

7. An ASP service method according to claim 6, wherein:
said step of extracting includes executing the processing on a periodic basis at a time in accordance with a billing time.

8. An ASP service method according to claim 6, wherein:
said step of extracting includes executing the extraction processing every month.
